# EUROPEAN PATENT APPLICATION

(11) **EP 4 293 882 A1**
(43) Date of publication of application: **20.12.2023**
(21) Application number: 22752832.0
(22) Date of filing: 10.02.2022
(51) Int. Cl.: H02K 7/06, F16H 25/20, F16H 25/22, F16H 25/24

(54) **ELECTRIC LINEAR ACTUATOR**

(30) Priority: 15.02.2021 JP 2021022172
(71) Applicant: Kokusai Keisokuki Kabushiki Kaisha, Tama-shi, Tokyo 206-0025 (JP)
(72) Inventor: MURAUCHI, Kazuhiro, Tama-shi, Tokyo 206-0025 (JP)
(74) Representative: Lewis Silkin LLP
(86) International application number: PCT/JP2022/005453
(87) International publication number: WO 2022/173010

(57) **Abstract**

To improve responsiveness of an electric linear actuator.

According to an embodiment of the present invention, there is provided an electric linear actuator including an outer cylinder, an electric motor attached to the outer cylinder, a ball screw configured to convert rotational motion output by the electric motor into linear motion in a predetermined direction, and a ball spline configured to transmit only the linear motion in the predetermined direction. The ball screw includes a screw shaft coupled to a shaft of the electric motor, and a first nut attached to the outer cylinder and fitted to the screw shaft. The ball spline includes a spline shaft connected to the first nut, and a second nut attached to the outer cylinder and fitted to the spline shaft.

## Description

### TECHNICAL FIELD

The present invention relates to an electric linear actuator.

### BACKGROUND ART

As a mechanism for realizing an industrial manipulator or a multi-axis vibration test apparatus, there is known a parallel mechanism (parallel link mechanism) in which a plurality of links are connected in parallel. In one type of parallel mechanism, a linear actuator which outputs a linear motion is used as a driving device.

Patent Document 1 discloses a vibration test apparatus in which a parallel mechanism is used. In the parallel mechanism disclosed in Patent Document 1, a hydraulic cylinder having an excellent responsiveness (e.g., having a speed response frequency of 100 Hz or more) is used as an actuator.

### PRIOR ART DOCUMENT

### PATENT DOCUMENT

[Patent Document 1] Japanese Patent Application Publication No. 2016-121961

### SUMMARY OF THE INVENTION

### PROBLEM TO BE SOLVED BY THE INVENTION

A hydraulic actuator requires a hydraulic pressure supply system including an oil tank and a hydraulic pump, and there is a problem that costs for installation and maintenance of the hydraulic pressure supply system are high. In addition, the hydraulic system has problems such as environmental pollution due to oil leakage, a risk of ignition of operating oil, and low energy efficiency.

The present invention is made in view of the above-mentioned circumstances, and it is an object of the present invention to provide an electric linear actuator having excellent responsiveness.

### MEANS FOR SOLVING THE PROBLEM

According to an embodiment of the present invention, there is provided an electric linear actuator including an outer cylinder, an electric motor attached to the outer cylinder, a ball screw configured to convert rotational motion output by the electric motor into linear motion in a predetermined direction, and a ball spline configured to transmit only the linear motion in the predetermined direction. The ball screw includes a screw shaft coupled to a shaft of the electric motor, and a first nut attached to the outer cylinder and fitted to the screw shaft. The ball spline includes a spline shaft connected to the first nut, and a second nut attached to the outer cylinder and fitted to the spline shaft.

The above-described electric linear actuator may include a bearing that rotatably supports a shaft that transmits the rotational motion, the outer cylinder may have a cylindrical base part, a bracket on a load side of the electric motor may be fixed to one end portion of the base part, and the bearing may be fixed to the other end portion of the base part.

The above-described electric linear actuator may include a coupling that couples the shaft of the electric motor and the screw shaft together, and the screw shaft may be supported by the bearing.

In the above-described electric linear actuator, a hole extending in the predetermined direction and capable of accommodating one end portion of the screw shaft may be formed on one end side of the spline shaft connected to the first nut.

In the above-described electric linear actuator, the outer cylinder may have a plurality of cylindrical parts arranged in the predetermined direction and coupled together.

In the above-described electric linear actuator, the plurality of cylindrical parts may include an electric motor accommodating part that accommodates the electric motor, the base part, a ball screw accommodating part that accommodates the ball screw, and a ball spline accommodating part that accommodates the ball spline, and the electric motor accommodating part, the base part, the ball screw accommodating part, and the ball spline accommodating part may be arranged in this order in the predetermined direction and coupled together.

In the above-described electric linear actuator, the outer cylinder may have a lid part that closes an opening of the electric motor accommodating part, and a coupling part that couples the lid part and a bracket on an anti-load side of the electric motor.

In the above-described electric linear actuator, brackets on a load side and an anti-load side of the electric motor may be fixed to the outer cylinder.

In the above-described electric linear actuator, a rated output of the electric motor may be 3kW or more, and an inertia moment of a rotating portion of the electric motor may be 0.01kg·m² or less.

### EFFECT OF THE INVENTION

According to an embodiment of the present invention, there is provided an electric linear actuator having excellent responsiveness.

### BRIEF DESCRIPTION OF THE DRAWINGS

[FIG. 1] FIG. 1 is an external view of an electric linear actuator according to one embodiment of the present invention.
[FIG. 2] FIG. 2 is a diagram showing an internal structure of the electric linear actuator according to one embodiment of the present invention.
[FIG. 3] FIG. 3 is a diagram showing an internal structure of the electric linear actuator according to one embodiment of the present invention.

### EMBODIMENTS FOR CARRYING OUT THE INVENTION

Hereinafter, embodiments of the present invention will be described with reference to the drawings. In the following description, the same or corresponding matters are denoted by the same or corresponding reference numerals, and redundant description thereof will be omitted. In the drawings, when a plurality of matters having a common reference numeral are shown, all of the plurality of matters are not necessarily denoted by the reference numeral, and thus denotation of the reference numeral for some of the plurality of matters is appropriately omitted.

An electric linear actuator 1 according to an embodiment of the present invention described below is an electric operating device capable of outputting a reciprocating linear motion. Although the electric linear actuator 1 according to the present embodiment is a general-purpose actuator, it is suitable as a driving source of parallel mechanisms such as a robot manipulator, a machine tool, a multi-axis vibration test apparatus, and a Stewart platform used as a mechanism of a flight simulator and the like.

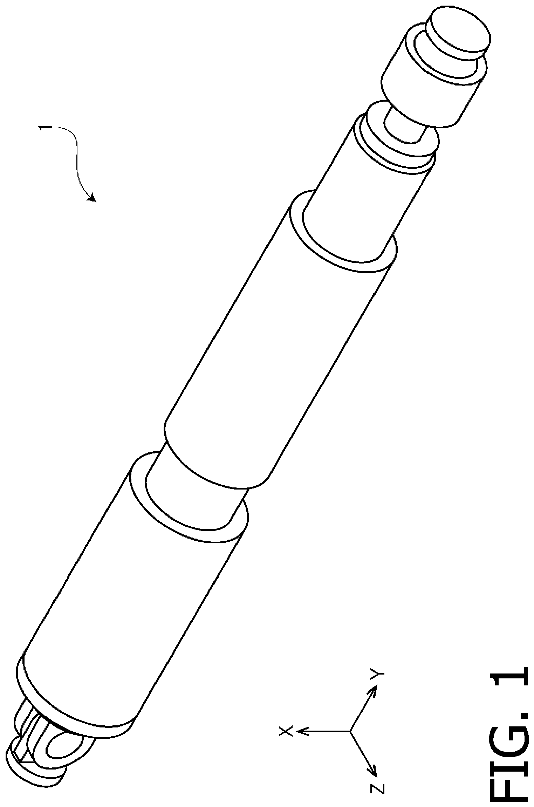

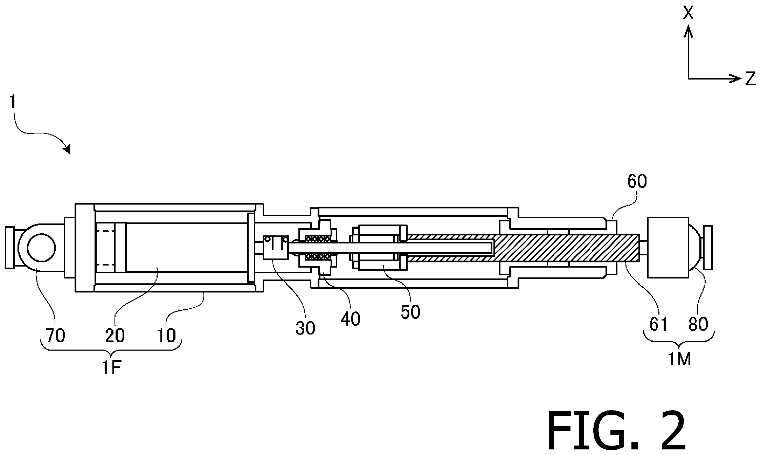

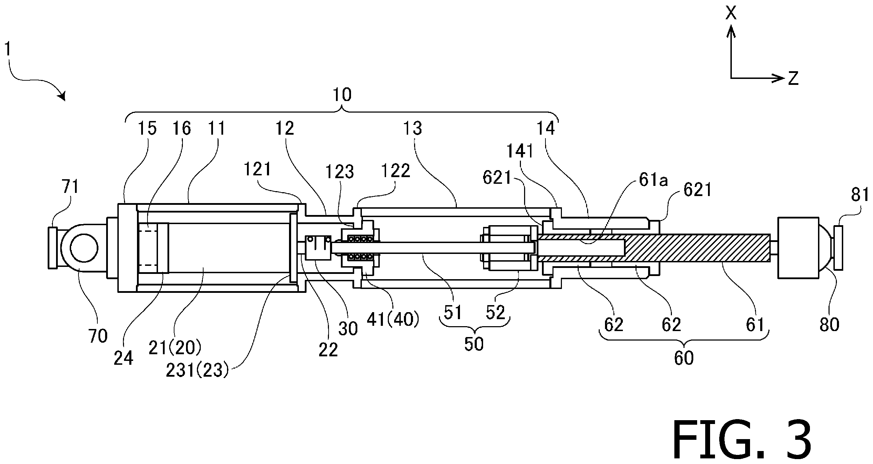

FIG. 1 is an external view of an electric linear actuator 1 according to one embodiment of the present invention. FIGS. 2 and 3 are diagrams showing an internal structure of the electric linear actuator 1.

As shown in FIG. 2, the electric linear actuator 1 includes a fixed part 1F, and a movable part 1M capable of moving back and forth (i.e., linear reciprocating motion) in a longitudinal direction with respect to the fixed part 1F. The electric linear actuator 1 expands and contracts due to the movable part 1M moving back and forth. FIG. 2 shows a contracted state of the electric linear actuator 1, and FIG. 3 shows an expanded state of the electric linear actuator 1.

In FIGS. 2 and 3, a direction from left to right is defined as a Z axis direction, a direction from bottom to top is defined as an X axis direction, and a direction perpendicular to the paper surface from back to front is defined as a Y axis direction. The Z axis direction is a direction in which the movable part 1M moves back and forth. A Z axis positive direction is referred to as front or a forward direction, and a Z axis negative direction is referred to as a rear or a backward direction. The Z axis direction in which the movable part 1M moves back and forth is referred to as an operating direction of the electric linear actuator 1.

As shown in FIG. 3, the electric linear actuator 1 includes an outer cylinder 10, a motor 20 (electric motor) having a main body 21 (stator) attached to the outer cylinder 10, a knuckle joint 70 (hinge) attached to the outer cylinder 10, a bearing 40 that rotatably supports a shaft (in the present embodiment, a screw shaft 51 which will be described later) that transmits power of the motor 20, a ball screw 50 that converts rotational motion outputted from the motor 20 into linear motion, a coupling 30 that connects a shaft 22 of the motor 20 and the screw shaft 51, and a ball spline 60 and a spherical joint 80 that transmit linear motion outputted from the ball screw 50.

The outer cylinder 10 has a first cylindrical part 11 (motor accommodating part) that accommodates the motor 20, a second cylindrical part 12 (base part) to which the motor 20 and the bearing 40 are attached, a third cylindrical part 13 (ball screw accommodating part) that accommodates the ball screw 50, a fourth cylindrical part 14 (ball spline accommodating part) that accommodates nuts 62 of the ball spline 60, a lid part 15 that closes an opening at a rear end of the first cylindrical part 11, and a cylindrical coupling part 16 that couples the motor 20 and the lid part 15. In more details, the first cylindrical part 11 accommodates the main body 21 of the motor 20 (and a portion of the shaft 22), and the third cylindrical part 13 accommodates the nut 52 of the ball screw 50 (and a portion of the screw shaft 51). A flange 621 formed at one end of each nut 62 of the ball spline 60 is disposed outside the fourth cylindrical part 14.

The plurality of cylindrical parts (the first cylindrical part 11, the second cylindrical part 12, the third cylindrical part 13, and the fourth cylindrical part 14) of the outer cylinder 10 are concentrically arranged in a line (i.e., with their center lines aligned) in this order, and are integrally connected by welding, bolting, or the like.

An outer flange 121 is formed on an outer periphery of a rear end portion (a left end portion in FIG. 3) of the second cylindrical part 12, an outer flange 122 is formed on an outer periphery of a front end portion (a right end portion in FIG. 3) of the second cylindrical part 12, and an inner flange 123 is formed on an inner periphery of the front end portion of the second cylindrical part 12. A front end of the first cylindrical part 11 is joined to the outer flange 121, and a rear end of the third cylindrical part 13 is joined to the outer flange 122.

A flange portion 231 of a bracket 23 on a load side of the motor 20 is fixed to a rear end of the second cylindrical part 12. A flange 41 of the bearing 40 is fixed to the inner flange 123 of the second cylindrical part 12. By adopting a configuration in which the motor 20 and the bearing 40 are attached to a common member (the second cylindrical part 12) as described above, centering of the motor 20 and the bearing 40 is facilitated.

An outer flange 141 is formed on an outer periphery of a rear end portion of the fourth cylindrical part 14, and a front end of the third cylindrical part 13 is joined to the outer flange 141. The rear end of the first cylindrical part 11 is joined to an edge of the lid part 15.

A rear end of the coupling part 16 is joined to a center of an inner surface of the lid part 15. A bracket 24 on an anti-load side of the motor 20 is attached to a front end of the coupling part 16. The bracket 24 may be directly fixed to the lid part 15 without the coupling part 16. The outer cylinder 10 of the present embodiment is formed to be larger than a size of the motor 20 so that the motor 20 can be replaced with one having a larger capacity. The outer cylinder 10 of the present embodiment is configured such that the motor 20 of a size within a certain range can be mounted by changing a size of the coupling part 16, a position of attachment holes, or the like in accordance with the size of the motor 20.

The shaft 22 of the motor 20 is rotatably supported by not-shown bearings respectively attached to the bracket 23 and the bracket 24. Normally, the motor 20 is fixed only by the bracket 23 on the load side, and is supported in a cantilever manner. In this case, support rigidity of the shaft 22 of the motor 20 on the anti-load side becomes relatively low. Therefore, when a large load is applied to the shaft 22, precessional motion of the shaft 22 occurs with the bearing attached to the bracket 23 on the load side as a fulcrum. This causes distortion in a power transmission shaft including the shaft 22, and driving performance of the electric linear actuator 1 and accuracy of drive control degrade.

In the present embodiment, by fixing the bracket 24 on the anti-load side of the motor 20 to the outer cylinder 10 as well and fixing the motor 20 at both ends, support rigidity on the anti-load side of the motor 20 is improved, and performance degradation due to the precessional motion of the shaft 22 is suppressed.

The motor 20 of the present embodiment is, for example, a high-output, ultra-low-inertia AC servomotor having a rated output of 3kW to 60kW (more practically, 7kW to 37kW), in which inertia moment of the rotating portion is suppressed to 0.01kg m2 or less (more preferably, 0.008kg m2 or less). The electric linear actuator 1 of the present embodiment can perform reciprocating linear driving at a frequency exceeding, for example, 100kHz by using such an ultra-low inertia motor, and can be used in applications requiring high responsiveness such as a vibration test apparatus.

The motor 20 is an AC servo motor, but various motors, such as a DC servo motor and a stepping motor, of which driving amount (rotation angle) can be controlled may be used as the motor 20.

Inside the second cylindrical part 12, the shaft 22 of the motor 20 and the screw shaft 51 of the ball screw 50 are coupled together by the coupling 30. For example, a fixed shaft joint is used as the coupling 30. The responsiveness can be improved by using the fixed shaft joint. The coupling 30 of the present embodiment is a cylindrical shat joint, but a flange-shaped fixed shaft joint may be used.

The ball screw 50 includes the screw shaft 51 and the nut 52 fitted to the screw shaft 51. The nut 52 reciprocates in the Z axis direction along the screw shaft 51 in accordance with rotation of the screw shaft 51.

The ball spline 60 includes a spline shaft 61 and two nuts 62 fitted to the spline shaft 61.

The flange 621 for fixing is formed at one end portion in an axial direction of each nut 62. The two nuts 62 are respectively fitted into a hollow portion of the fourth cylindrical part 14 of the outer cylinder 10 from both ends in an axial direction, and are fixed to the fourth cylindrical part 14 at the flanges 621. The spline shaft 61 is prevented from rotating with respect to the nuts 62 (i.e., with respect to the outer cylinder 10 to which the nuts 62 are attached), and is allowed to move only linearly in the Z axis direction.

A rear end of the spline shaft 61 is connected to a front end of the nut 52 of the ball screw 50. Thus, the nut 52 is prevented from rotating about the Z axis with respect to the outer cylinder 10, and is allowed to move only linearly in the Z axis direction.

A hole 61a extending in the Z axis direction is concentrically formed at a rear portion of the spline shaft 61. The hole 61a has an outer diameter larger than that of the screw shaft 51 of the ball screw 50, and accommodates a front portion of the screw shaft 51 in the contracted state as illustrated in Fig. 2 to avoid collision between the screw shaft 51 and the spline shaft 61.

As described above, in the electric linear actuator 1 according to the present embodiment, the knuckle joint 70 is provided to the fixed part 1F and the spherical joint 80 is provided to the movable part 1M to make the electric linear actuator 1 suitable for use as a linear joint of a parallel mechanism such as a Stewart platform. For example, when the electric linear actuator 1 is used as a linear joint of a Stewart platform, an attachment part 71 of the knuckle joint 70 is attached to a base side, and an attachment part 81 of the spherical joint 80 is attached to an output link side.

The knuckle joint 70 and the spherical joint 80 are not essential components. For example, the outer cylinder 10 may be directly attached to one of two targets to which relative movement is to be given by the electric linear actuator 1, and the spline shaft 61 may be directly attached to the other.

The above is a description of an illustrative embodiment of the present invention. Embodiments of the present invention are not limited to the one described above, and various modifications can be made within the scope of the technical idea of the present invention. For example, contents obtained by appropriately combining embodiments or the like explicitly illustrated in the specification and/or obvious embodiments or the like are also included in the embodiments of the present invention.

In the above-described embodiment, the bearing 40 supports the screw shaft 51, but the bearing 40 may support the shaft 22 of the motor 20. A relay shaft may be provided between the shaft 22 and the screw shaft 51, and the bearing 40 may support the relay shaft.

Another type of feed screw may be used in place of the ball screw 50.

Another type of joint such as a universal joint or a knuckle joint may be used in place of the spherical joint 80. Another type of joint such as a spherical joint or a universal joint may be used in place of the knuckle joint 70.

## Claims

1. An electric linear actuator comprising:
an outer cylinder;
an electric motor attached to the outer cylinder;
a ball screw configured to convert rotational motion output by the electric motor into linear motion in a predetermined direction; and
a ball spline configured to transmit only the linear motion in the predetermined direction,
wherein the ball screw includes:
a screw shaft coupled to a shaft of the electric motor; and
a first nut attached to the outer cylinder and fitted to the screw shaft, and
wherein the ball spline includes;
a spline shaft connected to the first nut; and
a second nut attached to the outer cylinder and fitted to the spline shaft.

2. The electric linear actuator according to claim 1,
wherein a hole extending in the predetermined direction and capable of accommodating one end portion of the screw shaft is formed on one end side of the spline shaft connected to the first nut.

3. The electric linear actuator according to claim 1 or 2,
comprising a bearing that rotatably supports a shaft that transmits the rotational motion,
wherein the outer cylinder has a cylindrical base part,
wherein a bracket on a load side of the electric motor is fixed to one end portion of the base part, and
wherein the bearing is fixed to the other end portion of the base part.

4. The electric linear actuator according to claim 3,
comprising a coupling that couples the shaft of the electric motor and the screw shaft together,
wherein the screw shaft is supported by the bearing.

5. The electric linear actuator according to claim 3 or 4,
wherein the outer cylinder has a plurality of cylindrical parts arranged in the predetermined direction and coupled together, the plurality of cylindrical parts including:
an electric motor accommodating part that accommodates the electric motor; the base part;
a ball screw accommodating part that accommodates the ball screw; and
a ball spline accommodating part that accommodates the ball spline,
wherein the electric motor accommodating part, the base part, the ball screw accommodating part, and the ball spline accommodating part are arranged in this order in the predetermined direction and coupled together.

6. The electric linear actuator according to claim 5,
wherein the outer cylinder has:
a lid part that closes an opening of the electric motor accommodating part; and
a coupling part that couples the lid part and a bracket on an anti-load side of the electric motor.

7. The electric linear actuator according to any one of claims 1 to 6,
wherein brackets on a load side and an anti-load side of the electric motor are fixed to the outer cylinder.

8. The electric linear actuator according to any one of claims 1 to 7,
wherein a rated output of the electric motor is 3kW or more, and an inertia moment of a rotating portion of the electric motor is 0.01kg·m² or less.
